# EUROPEAN PATENT APPLICATION

(11) **EP 4 564 944 A1**
(43) Date of publication of application: **04.06.2025**
(21) Application number: 23845369.0
(22) Date of filing: 18.07.2023
(51) Int. Cl.: H04W 64/00

(54) **POSITIONING PROCESSING METHOD, APPARATUS AND DEVICE**

(30) Priority: 26.07.2022 CN 202210883732
(71) Applicant: Datang Mobile Communications Equipment Co., Ltd., Beijing 100085 (CN)
(72) Inventor: ZHANG, Bufang, Beijing 100085 (CN)
(74) Representative: Studio Torta S.p.A.
(86) International application number: PCT/CN2023/107876
(87) International publication number: WO 2024/022157

(57) **Abstract**

The present disclosure provides a positioning processing method, device and equipment. The method includes: receiving, by a positioning server, a first message sent by a first device; wherein the first message indicates reduced capability (RedCap) positioning; initiating, by the positioning server, RedCap positioning according to the first message.

## Description

### CROSS-REFERENCE TO RELATED APPLICATION

The present application is filed based on and claims the priority of Chinese Application No. 202210883732.4 filed on July 26, 2022, the disclosure of which are incorporated in their entireties by reference herein.

### TECHNICAL FIELD

The present disclosure relates to the field of communication technologies, and in particular to a positioning processing method, device and equipment.

### BACKGROUND

Reduced capability (RedCap) terminal is a special type of terminal that has corresponding functional limitations in order to achieve its requirements of low complexity and low power. For example, the bandwidth supported by the RedCap UE is narrower, with a maximum of 20M in the frequency range 1 (FR1) and 100M in the frequency range 2 (FR2). The number of antennas supported, the duplex mode supported, Relaxed terminal processing time, relaxed terminal processing power, etc., are fewer. In addition, for the RedCap UE, in order to extend its operation life, further consideration is given to introducing corresponding energy-saving enhancement mechanisms, which includes relaxed radio resource management (RRM) measurement, idle state or inactive state enhanced discontinuous reception (eDRX) mechanism, etc.

For RedCap positioning scenarios, a to-be-positioned terminal is a RedCap type terminal with limited functions, for example, it supports a narrower bandwidth and supports fewer receiving and transmitting antennas. If a positioning server cannot identify that this is a positioning for the RedCap UE and related attributes of the RedCap UE, it will cause a reference signal configured by the positioning server to be unreasonable, resulting in positioning failure.

### SUMMARY

An object of embodiments of the present disclosure is to provide a positioning processing method, device and equipment, which can solve the problem of positioning failure caused by that a positioning server cannot identify a RedCap UE.

In order to solve the above problem, one embodiment of the present disclosure provides a positioning processing method, including:
receiving, by a positioning server, a first message sent by a first device; wherein the first message indicates reduced capability (RedCap) positioning;
initiating, by the positioning server, RedCap positioning according to the first message.

The first device includes one or more of the following:
UE;
an access network equipment accessed by the UE;
a core network equipment that provides services for the UE.

The first message carries one or more of the following:
an identifier of a to-be-located UE;
RedCap capability information of the to-be-located UE;
location services (LCS) identifier;
LTE positioning protocol (LPP) transmission identifier;
NR positioning protocol a (NRPPa) transmission identifier;
first indication information indicating that the to-be-located UE is a RedCap UE;
second indication information indicating that a positioning service type for the UE is RedCap positioning.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

The first message is at least one of the following:
positioning service request message;
LPP message;
NRPPa message.

One embodiment of the present disclosure provides a positioning processing method, including:
sending, by a UE, a first message to a positioning server; wherein the first message indicates RedCap positioning.

The first message carries one or more of the following:
an identifier of a to-be-located UE;
RedCap capability information of the to-be-located UE;
LPP transmission identifier;
first indication information indicating that the to-be-located UE is a RedCap UE.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

One embodiment of the present disclosure provides a positioning processing method, including:
sending, by an access network equipment, a first message to a positioning server; wherein the first message is used to indicate RedCap positioning;
wherein the access network equipment is an access network equipment to which the UE accesses.

The first message carries one or more of the following:
an identifier of a to-be-located UE;
RedCap capability information of the to-be-located UE;
NR positioning protocol a (NRPPa) transmission identifier;
first indication information indicating that the to-be-located UE is a RedCap UE.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

One embodiment of the present disclosure provides a positioning processing method, including:
sending, by a core network equipment, a first message to a positioning server; wherein the first message indicates RedCap positioning.

The first message carries one or more of the following:
an identifier of a to-be-located UE;
RedCap capability information of the to-be-located UE;
location services (LCS) identifier;
first indication information indicating that the to-be-located UE is a RedCap UE;
second indication information indicating that a positioning service type for the UE is RedCap positioning.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

Before the core network equipment sends the first message to the positioning server, the method further includes:
determining, by the core network equipment, information carried in the first message.

The determining, by the core network equipment, information carried in the first message, includes:
determining, by the core network equipment, the information carried in the first message according to information sent by a positioning service request initiating device.

One embodiment of the present disclosure provides a positioning processing device, including:
a receiving unit configured to receive a first message sent by a first device; wherein the first message indicates reduced capability (RedCap) positioning;
a positioning unit used to initiate RedCap positioning according to the first message.

One embodiment of the present disclosure provides a positioning server, including: a memory, a transceiver, and a processor;
wherein the memory is used to store a computer program; the transceiver is used to send and receive data under control of the processor; the processor is used to read the computer program in the memory and perform the following operations:
receiving a first message sent by a first device; wherein the first message indicates reduced capability (RedCap) positioning;
initiating RedCap positioning according to the first message.

One embodiment of the present disclosure provides a positioning processing device, including:
a first sending unit configured to send a first message to a positioning server; wherein the first message indicates RedCap positioning.

One embodiment of the present disclosure provides a UE, including: a memory, a transceiver, and a processor;
wherein the memory is used to store a computer programs; the transceiver is used to send and receive data under control of the processor; the processor is used to read the computer program in the memory and perform the following operations:
sending a first message to a positioning server; wherein the first message indicates RedCap positioning.

One embodiment of the present disclosure provides a positioning processing device, including:
a second sending unit configured to send a first message to a positioning server; wherein the first message indicates RedCap positioning;
wherein the access network equipment is an access network equipment to which the UE accesses.

One embodiment of the present disclosure provides an access network equipment, including: a memory, a transceiver, and a processor;
wherein the memory is used to store a computer program; the transceiver is used to send and receive data under control of the processor; the processor is used to read the computer program in the memory and perform the following operations:
sending a first message to a positioning server; wherein the first message indicates RedCap positioning;
wherein the access network equipment is an access network equipment to which the UE accesses.

One embodiment of the present disclosure provides a positioning processing device, including:
a third sending unit configured to send a first message to a positioning server; wherein the first message indicates RedCap positioning.

One embodiment of the present disclosure provides an access network equipment, including: a memory, a transceiver, and a processor;
wherein the memory is used to store a computer program; the transceiver is used to send and receive data under control of the processor; the processor is used to read the computer program in the memory and perform the following operations:
sending a first message to a positioning server; wherein the first message indicates RedCap positioning.

One embodiment of the present disclosure provides a processor-readable storage medium, including a computer program stored thereon; wherein the computer program is used to cause a processor to perform the above method.

The beneficial effects of the above technical solution in the present disclosure are as follows.

According to the positioning processing method, device and equipment in the embodiment of the present disclosure, the first device provides to the positioning server, the first message for indicating the RedCap positioning, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

### BRIEF DESCRIPTION OF THE DRAWINGS

FIG. 1 is a block diagram of a wireless communication system to which embodiments of the present disclosure are applicable;
FIG. 2 is a first schematic flowchart of a positioning processing method according to an embodiment of the present disclosure;
FIG. 3 is a second schematic flowchart of a positioning processing method according to an embodiment of the present disclosure;
FIG. 4 is a third schematic flowchart of a positioning processing method according to an embodiment of the present disclosure;
FIG. 5 is a fourth schematic flowchart of a positioning processing method according to an embodiment of the present disclosure;
FIG. 6 is a first schematic diagram of a positioning processing device according to an embodiment of the present disclosure;
FIG. 7 is a schematic diagram of a positioning server according to an embodiment of the present disclosure;
FIG. 8 is a second schematic diagram of a positioning processing device according to an embodiment of the present disclosure;
FIG. 9 is a schematic diagram of a user equipment (UE) according to an embodiment of the present disclosure;
FIG. 10 is a third schematic diagram of a positioning processing device according to an embodiment of the present disclosure;
FIG. 11 is a schematic diagram of an access network equipment according to an embodiment of the present disclosure;
FIG. 12 is a fourth schematic diagram of a positioning processing device according to an embodiment of the present disclosure; and
FIG. 13 is a schematic diagram of a core network equipment according to an embodiment of the present disclosure.

### DETAILED DESCRIPTION

In order to make technical problems to be solved, technical solutions and advantages of the present disclosure clearer, a detailed description will be given hereinafter with reference to the accompanying drawings and specific embodiments.

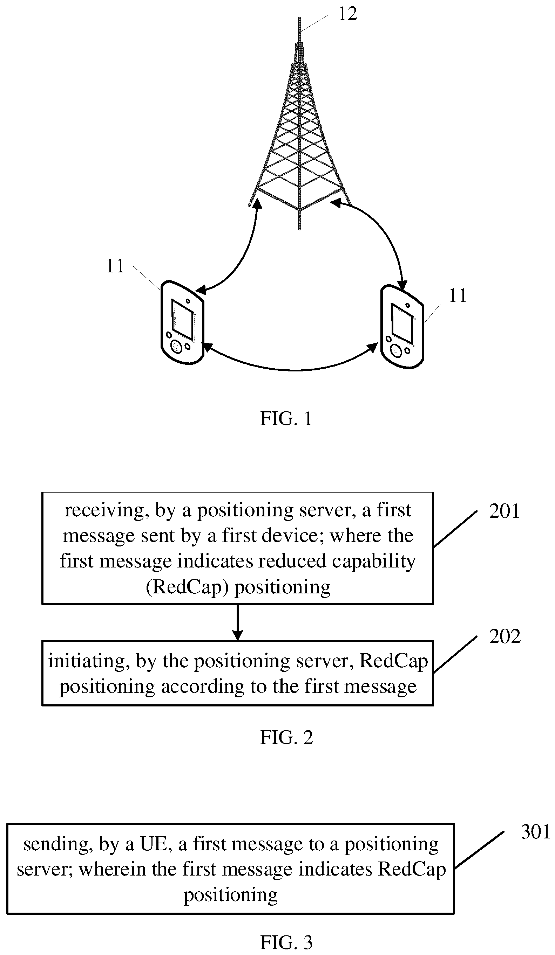

FIG. 1 is a block diagram of a wireless communication system to which embodiments of the present disclosure are applicable. The wireless communication system includes a terminal device 11 and a network equipment 12. The terminal device 11 may also be called a terminal or a user equipment (UE). It is to be noted that the embodiment of the present disclosure does not limit the specific type of the terminal device 11. The network equipment 12 may be a base station or a core network. It is to be noted that in the embodiment of the present disclosure, a base station in the NR system is only taken as an example, but the specific type of the base station is not limited.

In the embodiment of the present disclosure, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present disclosure, the term "plurality" refers to two or more than two, and other quantifiers are similar.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

The technical solutions provided in the embodiments of the present disclosure can be applied to various systems, especially fifth generation mobile communication technology (5G) systems. For example, an applicable system may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, Long term evolution advanced (LTE-A) system, universal mobile telecommunication system (UMTS), worldwide interoperability for microwave access (WiMAX) system, 5G New Radio, NR) system, etc. each of these various systems include a terminal device and a network equipment. The system may further include a core network part, such as an evolved packet system (EPS), a 5G system (5GS), etc.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network equipment involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network equipment is used to exchange a received air frame with an Internet Protocol (IP) packet, and it serves as a router between the wireless terminal device and the other part of the access network. The other part of the access network includes an IP communication network. The network equipment may further coordinate attribute management on the air interface. For example, the network equipment involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network equipment includes a Centralized Unit (CU) and a Distributed Unit (DU), which may be geographically separated from each other.

Multi Input Multi Output (MIMO) transmission is performed between the network equipment and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

As shown in FIG. 2, one embodiment of the present disclosure provides a positioning processing method, which includes:
Step 201: receiving, by a positioning server, a first message sent by a first device; where the first message indicates reduced capability (RedCap) positioning;
Step 202: initiating, by the positioning server, RedCap positioning according to the first message.

Optionally, in this step, the positioning server determines, based on the first message, that a to-be-located target UE is a UE that supports RedCap capabilities and that corresponding RedCap capability information of the RedCap UE, and configures an appropriate positioning reference signal based on the above information.

Optionally, the positioning server is a location management function (LMF) network element.

In at least one optional embodiment of the present disclosure, the first device includes one or more of the following:
UE, for example, the UE is the to-be-located UE;
an access network equipment accessed by the UE; for example, a serving cell accessed by the UE, or a base station corresponding to a serving cell accessed by the UE;
a core network equipment that provides services for the UE. For example, the core network equipment is an access and mobility management function (AMF) network element.

As an optional embodiment, the first message carries one or more of the following:
an identifier of a to-be-located UE;
RedCap capability information of the to-be-located UE;
location services (LCS) identifier;
LTE positioning protocol (LPP) transmission identifier;
NR positioning protocol a (NRPPa) transmission identifier;
first indication information indicating that the to-be-located UE is a RedCap UE;
second indication information indicating that a positioning service type for the UE is RedCap positioning.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

It is to be noted that the "UE supporting the RedCap capability" mentioned in the present disclosure may also be called a RedCap UE.

In at least one embodiment of the present disclosure, the first message is at least one of the following:
positioning service request message;
LPP message;
NRPPa message.

Optionally, the LPP message may be an LPP message for providing positioning capability, or an LPP message for requesting assistance data, or an LPP message for providing measurement result, or other newly introduced LPP message, which are not specifically limited here.

Optionally, before the step 201, the method further includes:
sending, by the positioning server, a second message to the first device; wherein the second message is used to request for obtaining RedCap positioning auxiliary information of the to-be-located UE.

Correspondingly, the step 201 includes:
receiving, by the positioning server, the first message sent by the first device in response to the second message.

In other words, in the embodiment of the present disclosure, the first device may actively send the first message to the positioning server, or may report the corresponding first message after receiving the second message sent by the positioning server, which is not specifically limited here.

As an optional embodiment, the second message is at least one of the following:
NRPPa message;
LPP message.

Optionally, the LPP message may be an LPP message for providing positioning capability, or an LPP message for requesting assistance data, or an LPP message for providing measurement result, or other newly introduced LPP message, which is not specifically limited here.

In summary, in the embodiment of the present disclosure, the first device provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

As shown in FIG. 3, one embodiment of the present disclosure further provides a positioning processing method, which includes:
Step 301: sending, by a UE, a first message to a positioning server; where the first message indicates RedCap positioning. The positioning server initiates RedCap positioning according to the first message.

Optionally, the positioning server determines, based on the first message, a to-be-located target UE being a UE which supports RedCap capability, and corresponding RedCap capability information of the RedCap UE, and configures an appropriate positioning reference signal based on the above information.

Optionally, the UE is a to-be-located UE that supports RedCap capability; and/or the positioning server is a location management function (LMF) network element.

In at least one optional embodiment of the present disclosure, the first message carries one or more of the following:
an identifier of a to-be-located UE;
RedCap capability information of the to-be-located UE;
LPP transmission identifier;
first indication information indicating that the to-be-located UE is a RedCap UE.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

It is to be noted that the "UE supporting the RedCap capability" mentioned in the present disclosure may also be called a RedCap UE.

In at least one embodiment of the present disclosure, before the step 301, the method further includes:
receiving, by the UE, a second message sent by the positioning server; where the second message is used to request for obtaining RedCap positioning auxiliary information of the to-be-located UE.

Correspondingly, the step 301 includes:
sending, by the UE, the first message to the positioning server, in response to the second message.

In other words, in the embodiment of the present disclosure, the UE may actively send the first message to the positioning server, or may report the corresponding first message after receiving the second message sent by the positioning server, which is not specifically limited here.

In order to describe more clearly the positioning processing method provided in the embodiment of the present disclosure, an example will be described hereinafter.

Example 1: a to-be-located UE is indicated as a RedCap UE, and/or RedCap-related capability information is provided to the LMF; in this example, the first message is an LPP providing UE positioning capability message.

Step 1: optionally, LMF receives a positioning request from AMF and determines UE identity (ID) of the to-be-located UE.

Step 2: optionally, the LMF sends a second message, i.e., an LPP positioning capability request message, to the to-be-located UE, requesting for obtaining a UE type of the to-be-located UE and/or UE capability information of the to-be-located UE.

Step 3: the UE sends a first message to the LMF. The first message is an LPP providing UE positioning capability message for providing first indication information indicating that the to-be-located UE is a RedCap UE, and/or providing RedCap capability information of the to-be-located UE to the LMF.

The first message carries one or more of the following:
an identifier of a to-be-located UE;
RedCap capability information of the to-be-located UE;
LPP transmission identifier;
first indication information indicating that the to-be-located UE is a RedCap UE.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

Step 3: the LMF receives the first message sent by the UE, and determines that the positioning is RedCap positioning according to the first message. Afterwards, the LMF initiates a positioning procedure for positioning the RedCap UE.

In summary, in the embodiments of the present disclosure, the UE provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

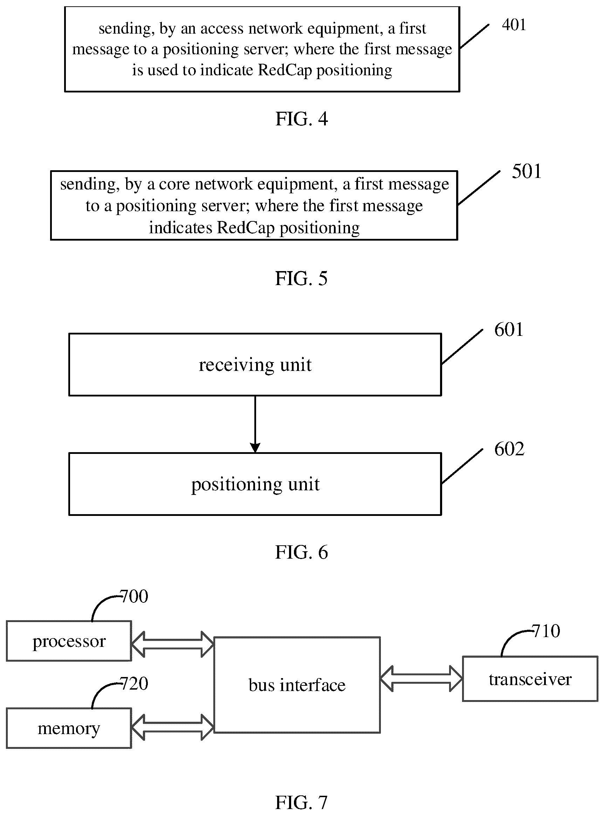

As shown in FIG. 4, one embodiment of the present disclosure further provides a positioning processing method, which includes:
Step 401: sending, by an access network equipment, a first message to a positioning server; where the first message is used to assist the UE in RedCap positioning.

The access network equipment is an access network equipment to which the UE accesses.

Optionally, the positioning server that receives the first message, initiates RedCap positioning, according to the first message. Optionally, in this step, the positioning server determines, based on the first message, that the to-be-located target UE is a UE that supports RedCap capability and the corresponding RedCap capability information of the RedCap UE, and configures an appropriate positioning reference signal based on the above information.

Optionally, the access network equipment is a serving cell to which the UE accesses, or a base station corresponding to the serving cell to which the UE accesses.

In at least one optional embodiment of the present disclosure, the first message carries one or more of the following:
an identifier of a to-be-located UE;
RedCap capability information of the to-be-located UE;
NR positioning protocol a (NRPPa) transmission identifier;
first indication information indicating that the to-be-located UE is a RedCap UE.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

It is to be noted that the "UE supporting the RedCap capability" mentioned in the present disclosure may also be called a RedCap UE.

In at least one embodiment of the present disclosure, before the step 401, the method further includes:
receiving, by the access network equipment, a second message sent by the positioning server; where the second message is used to request for obtaining RedCap positioning auxiliary information of the to-be-located UE.

Correspondingly, the step 401 includes:
sending, by the access network equipment, the first message to the positioning server, in response to the second message.

In other words, in the embodiment of the present disclosure, the access network equipment may actively send the first message to the positioning server, or may report the corresponding first message after receiving the second message sent by the positioning server, which is not specifically limited here.

In order to describe more clearly the positioning processing method provided in the embodiment of the present disclosure, an example will be described hereinafter.

Example 2: a serving base station of a to-be-located UE indicates that the UE is a RedCap UE, and/or providing RedCap-related capability information to an LMF. In this example, the first message is an NRPPa message.

Step 1: LMF receives a positioning request from AMF and determines a UE ID of the to-be-located UE.

Step 2: the LMF sends a second message, i.e., an NRPPa request message, to the serving base station of the to-be-located UE, requesting for obtaining a UE type of the to-be-located UE and/or UE capability information of the to-be-located UE.

Step 3: the base station sends a first message to the LMF. The first message is an NRPPa message for providing first indication information indicating that the to-be-located UE is a RedCap UE, and/or providing RedCap capability information of the to-be-located UE to the LMF.

The first message includes one or more of the following:
an identifier of a to-be-located UE;
RedCap capability information of the to-be-located UE;
NRPPa transmission identifier;
first indication information indicating that the to-be-located UE is a RedCap UE.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

Step 3: the LMF receives the first message sent by the base station, and determines that the positioning is RedCap positioning according to the first message. Afterwards, the LMF initiates a positioning procedure for positioning the RedCap UE.

In summary, in the embodiments of the present disclosure, the access network equipment to which the UE accesses, provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

As shown in FIG. 5, one embodiment of the present disclosure further provides a positioning processing method, including:
Step 501: sending, by a core network equipment, a first message to a positioning server; where the first message indicates RedCap positioning. The positioning server initiates RedCap positioning according to the first message.

Optionally, the positioning server determines, based on the first message, that the to-be-located target UE is a UE supporting RedCap capability and the corresponding RedCap capability information of the RedCap UE, and configures an appropriate positioning reference signal based on the above information.

Optionally, the UE is a to-be-located UE that supports RedCap capability.

Optionally, the positioning server is a location management function (LMF) network element.

Optionally, the core network equipment is specifically a core network equipment that provides services for UEs. For example, the core network equipment is an access and mobility management function (AMF) network element.

In at least one optional embodiment of the present disclosure, the first message carries one or more of the following:
an identifier of a to-be-located UE;
RedCap capability information of the to-be-located UE;
location services (LCS) identifier;
first indication information indicating that the to-be-located UE is a RedCap UE;
second indication information indicating that a positioning service type for the UE is RedCap positioning.

The RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

It is to be noted that the "UE supporting the RedCap capability" mentioned in the present disclosure may also be called a RedCap UE.

In at least one embodiment of the present disclosure, before the step 501, the method further includes:
determining, by the core network equipment, information carried in the first message.

"The core network equipment determining information carried in the first message" can be understood to mean that the core network equipment actively generates information carried in the first message.

It can also be understood to mean that: the core network equipment determines the information carried in the first message according to information sent by a positioning service request initiating device.

Optionally, "the core network equipment determining the information carried in the first message according to information sent by a positioning service request initiating device" can be understood to mean that: the core network equipment directly forwards the information after receiving the information from the positioning service request initiating device, that is, the information carried in the first message is generated by the positioning service request initiating device; or, after the core network equipment receives the information from the positioning service request initiating device, the core network equipment needs to parse the information, and then the core network equipment regenerates information carried in the first message.

In order to describe more clearly the positioning processing method provided in the embodiment of the present disclosure, an example will be described hereinafter.

Example 3: when AMF initiates a positioning service request, the positioning service request carries RedCap positioning service type indication information and is provided to LMF (the RedCap positioning service type indication information is generated by a positioning service initiator and provided to AMF, and AMF forwards it to LMF). In this example, the first message is a positioning service request message sent by AMF to LMF.

Step 1: AMF itself has positioning requirement, or AMF receives an external positioning request, or AMF receives a positioning request from the UE side, and the positioning request carries UE ID information.

Step 2a: optionally, if the positioning request received by the AMF in the step 1 carries indication information indicating that the positioning service type is RedCap positioning, the AMF sends a positioning service request message to the LMF. The positioning service request message includes second indication information received by the AMF indicating that the positioning service type is RedCap positioning.

Step 2b: optionally, if the positioning request received by the AMF in the step 1 does not carry indication information related to the positioning service type, the AMF determines that the UE type of the to-be-located UE is RedCap UE based on UE ID carried in the positioning request. Afterwards, the AMF sends a positioning service request message to the LMF, and the positioning service request message carries second indication information indicating that the positioning service type is RedCap positioning.

Regarding the above steps 2a and 2b, in addition to the second indication information that the positioning service type of the to-be-located UE is RedCap positioning, the positioning service request message further includes one or more of the following:
The to-be-located UE ID;
LCS identifier.

Step 3: the LMF receives the positioning service request message sent by the AMF, and determines that the positioning is RedCap positioning according to the first message. Afterwards, the LMF initiates a positioning procedure for positioning RedCap UE.

Example 4: when the AMF initiates a positioning service request, the positioning service request carries RedCap type UE indication information and is provided to LMF (the RedCap type UE indication information is generated by AMF and provided to LMF). In this example, the first message is a positioning service request message sent by AMF to LMF.

Step 1: AMF itself has positioning requirement, or AMF receives an external positioning request, or AMF receives a positioning request from the UE side, and the positioning request carries UE ID information.

Step 2: based on the UE ID carried in the positioning request, the AMF determines that the UE type of the to-be-located UE is RedCap UE. Afterwards, the AMF sends a positioning service request message to the LMF, and the positioning service request message carries first indication information indicating that the to-be-located UE is a RedCap type UE.

Regarding the above step 2, in addition to the first indication information that the to-be-located UE is a RedCap type UE, the positioning service request message further includes one or more of the following:
To-be-located UE ID;
LCS identifier.

Step 3: the LMF receives the positioning service request message sent by the AMF, and determines that the to-be-located UE is a RedCap UE according to the first message. Afterwards, the LMF initiates a positioning procedure for positioning the RedCap UE.

Example 5: when AMF initiates a positioning service request, the positioning service request carries RedCap-related UE capability (RedCap capability information of the to-be-located UE) and is provided to LMF (the RedCap capability information of the to-be-located UE is generated by AMF and provided to LMF); in this example, the first message is the positioning service request message sent by AMF to LMF.

Step 1: AMF itself has positioning requirement, or AMF receives an external positioning request, or AMF receives a positioning request from the UE side, and the positioning request carries UE ID information.

Step 2: based on the UE ID carried in the positioning requirement, the AMF determines that the UE type of the to-be-located UE is RedCap UE. Afterwards, the AMF sends a positioning service request message to the LMF, and the positioning service request message carries the RedCap-related UE capability of the to-be-located UE. The RedCap-related UE capability at least includes:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of the UE that supports RedCap capability.

Regarding the above step 2, in addition to the RedCap-related UE capability for the to-be-located UE, the positioning service request message further includes one or more of the following:
to-be-located UE ID;
LCS identifier.
Step 3: the LMF receives the positioning service request message sent by the AMF, and determines, according to the first message, that the positioning is RedCap positioning. Afterwards, LMF initiates a positioning procedure for positioning RedCap UE.

Example 6: the positioning server (LMF) matches a corresponding positioning reference signal based on RedCap-related characteristics
The positioning server (LMF) obtains that this positioning service is RedCap positioning of the RedCap UE and/or related capability information of the RedCap ue, according to at least one of the examples 1 to 5. During the process that the positioning server (LMF) interacts with the base station to configure positioning reference signals, the positioning server (LMF) takes into account relevant RedCap capability information. For example, a bandwidth of the positioning reference signal configured for RedCap positioning needs to be less than or equal to the maximum bandwidth of the RedCap UE; when configuring positioning reference signals for RedCap positioning, it is necessary to coordinate the time-frequency domain position of the positioning reference signal to match the (e) DRX configuration (for example, to ensure that the transmission moment of the positioning reference signal falls on the DRX on period).

In summary, in the embodiment of the present disclosure, the core network equipment provides, to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

As shown in FIG. 6, one embodiment of the present disclosure further provides a positioning processing device, including:
a receiving unit 601 used to receive a first message sent by a first device; where the first message indicates reduced capability (RedCap) positioning;
a positioning unit 602 used to initiate RedCap positioning according to the first message.

As an optional embodiment, the first device includes one or more of the following:
UE;
an access network equipment accessed by the UE;
a core network equipment that provides services for the UE.

As an optional embodiment, the first message carries one or more of the following:
an identifier of a to-be-located UE;
RedCap capability information of the to-be-located UE;
location services (LCS) identifier;
LTE positioning protocol (LPP) transmission identifier;
NR positioning protocol a (NRPPa) transmission identifier;
first indication information indicating that the to-be-located UE is a RedCap UE;
second indication information indicating that a positioning service type for the UE is RedCap positioning.

As an optional embodiment, the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

As an optional embodiment, the first message is at least one of the following:
positioning service request message;
LPP message;
NRPPa message.

As an optional embodiment, the device further includes:
a fourth sending unit used to send a second message to the first device; wherein the second message is used to request for obtaining RedCap positioning auxiliary information of the to-be-located UE.

The receiving unit is further used to:
receive the first message sent by the first device in response to the second message.

As an optional embodiment, the second message is at least one of the following:
NRPPa message;
LPP message.

In the embodiment of the present disclosure, the first device provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

It is to be noted that the positioning processing device provided in the embodiment of the present disclosure is a device capable of executing the above positioning processing method, then all embodiments of the above positioning processing method are applicable to the device, and can achieve the same or similar beneficial effects.

As shown in FIG. 7, one embodiment of the present disclosure further provides a positioning server, including a memory 720, a transceiver 710, and a processor 700.

The memory 720 is used to store a computer program. The transceiver 710 is used to send and receive data under control of the processor 700. The processor 700 is used to read the computer program in the memory 720 and perform the following operations:
receiving a first message sent by a first device; where the first message indicates reduced capability (RedCap) positioning;
initiating RedCap positioning according to the first message.

As an optional embodiment, the first device includes one or more of the following:
UE;
an access network equipment accessed by the UE;
a core network equipment that provides services for the UE.

As an optional embodiment, the first message carries one or more of the following:
an identifier of a to-be-located UE;
RedCap capability information of the to-be-located UE;
location services (LCS) identifier;
LTE positioning protocol (LPP) transmission identifier;
NR positioning protocol a (NRPPa) transmission identifier;
first indication information indicating that the to-be-located UE is a RedCap UE;
second indication information indicating that a positioning service type for the UE is RedCap positioning.

As an optional embodiment, the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

As an optional embodiment, the first message is at least one of the following:
positioning service request message;
LPP message;
NRPPa message.

As an optional embodiment, the processor 700 is further used to read the computer program in the memory 720 and perform the following operations:
sending a second message to the first device; wherein the second message is used to request for obtaining RedCap positioning auxiliary information of the to-be-located UE;
receiving the first message sent by the first device in response to the second message.

As an optional embodiment, the second message is at least one of the following:
NRPPa message;
LPP message.

In FIG. 7, a bus architecture may include any number of interconnected bus and bridge. Specifically, various circuits of one or more processors, which are represented by the processor 700, and one or more memories, which are represented by the memory 720, are linked together. The bus architecture may link various other circuits, such as a peripheral device, voltage regulator and a power management circuit together. These features are well known in this field; therefore, the present disclosure does not make further description on these features. The bus interface provides an interface. The transceiver 710 may be multiple elements, including a transmitter and a receiver and provide units, which communicate with other devices on the transmission medium. The transmission medium includes radio channels, wired channels, optical cables, etc. The processor 700 is responsible for managing the bus architecture and the normal processing. The memory 720 may be used to store data used by the processor 700 for performing operations.

The processor 700 may be a central processing unit (CPU), an application specific integrated circuit (ASIC), a field-programmable gate array (FPGA) or a complex programmable logic device (CPLD). The processor may also adopt multi-core architecture.

In the embodiment of the present disclosure, the first device provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

It is to be noted that the positioning server provided in the embodiment of the present disclosure is a positioning server capable of executing the above positioning processing method, then all embodiments of the above positioning processing method are applicable to the positioning server, and can achieve the same or similar beneficial effects.

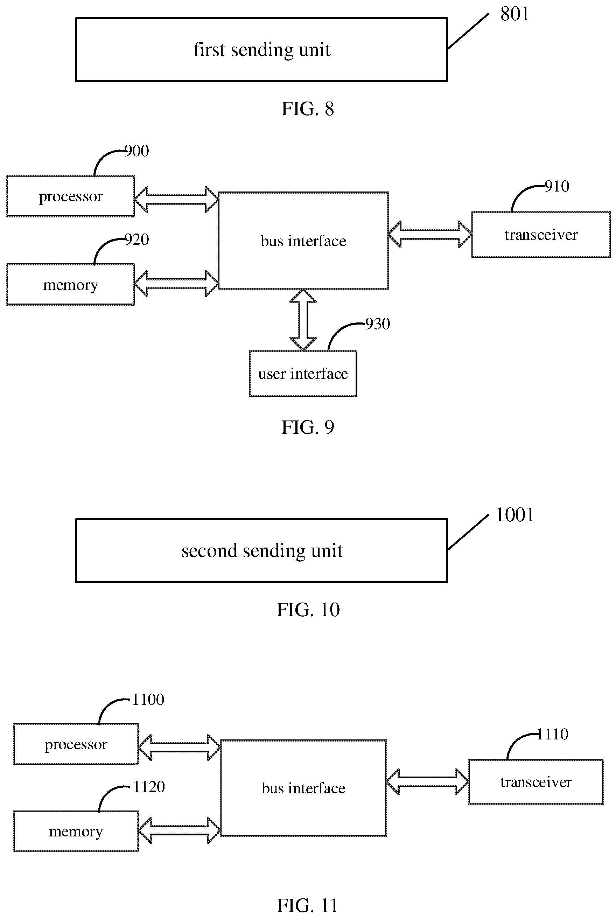

As shown in FIG. 8, one embodiment of the present disclosure further provides a positioning processing device, including:
a first sending unit 801 used to send a first message to a positioning server; wherein the first message indicates RedCap positioning.

As an optional embodiment, the first message carries one or more of the following:
an identifier of a to-be-located UE;
RedCap capability information of the to-be-located UE;
LPP transmission identifier;
first indication information indicating that the to-be-located UE is a RedCap UE.

As an optional embodiment, the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

As an optional embodiment, the device further includes:
a second receiving unit used to receive a second message sent by the positioning server; where the second message is used to request for obtaining RedCap positioning auxiliary information of the to-be-located UE.

The first sending unit is further used to:
send the first message to the positioning server, in response to the second message.

In the embodiment of the present disclosure, the first device provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

It is to be noted that the positioning processing device provided in the embodiment of the present disclosure is a device capable of executing the above positioning processing method, then all embodiments of the above positioning processing method are applicable to the device, and can achieve the same or similar beneficial effects.

As shown in FIG. 9, one embodiment of the present disclosure further provides a UE, including a memory 920, a transceiver 910 and a processor 900.

The memory 920 is used to store a computer program. The transceiver 910 is used to send and receive data under the control of the processor 900. The processor 900 is used to read the computer program in the memory 920 and perform the following operations:
sending a first message to a positioning server; wherein the first message indicates RedCap positioning.

As an optional embodiment, the first message carries one or more of the following:
an identifier of a to-be-located UE;
RedCap capability information of the to-be-located UE;
LPP transmission identifier;
first indication information indicating that the to-be-located UE is a RedCap UE.

As an optional embodiment, the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

As an optional embodiment, the processor 900 is further used to read the computer program in the memory 920 and perform the following operations:
receiving a second message sent by the positioning server; where the second message is used to request for obtaining RedCap positioning auxiliary information of the to-be-located UE;
sending the first message to the positioning server, in response to the second message.

In FIG. 9, a bus architecture may include any number of interconnected bus and bridge. Specifically, various circuits of one or more processors, which are represented by the processor 900, and one or more memories, which are represented by the memory 920, are linked together. The bus architecture may link various other circuits, such as a peripheral device, voltage regulator and a power management circuit together. These features are well known in this field; therefore, this disclosure does not make further description on these features. The bus interface provides an interface. The transceiver 910 may be multiple elements, including a transmitter and a receiver and provide units, which communicate with other devices on the transmission medium. The transmission medium includes radio channels, wired channels, optical cables, etc. For different UEs, a user interface 930 may be an interface that can be connected to external or internal devices. The connected devices include but are not limited to a small keyboard, a display, a speaker, a microphone, a joystick, etc.

The processor 900 is responsible for managing the bus architecture and the normal processing. The memory 920 may be used to store data used by the processor 103 for performing operations.

Optionally, the processor 900 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In the embodiment of the present disclosure, the UE provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

It is to be noted that the UE provided in the embodiment of the present disclosure is a UE capable of executing the above positioning processing method, then all embodiments of the above positioning processing method are applicable to the UE, and can achieve the same or similar beneficial effects.

As shown in FIG. 10, one embodiment of the present disclosure further provides a positioning processing device, including:
a second sending unit 1001 used to send a first message to a positioning server; where the first message indicates RedCap positioning.

The access network equipment is an access network equipment to which the UE is accessed.

As an optional embodiment, the first message carries one or more of the following:
an identifier of a to-be-located UE;
RedCap capability information of the to-be-located UE;
LPP transmission identifier;
first indication information indicating that the to-be-located UE is a RedCap UE.

As an optional embodiment, the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

As an optional embodiment, the device further includes:
a second receiving unit used to receive a second message sent by the positioning server; where the second message is used to request for obtaining RedCap positioning auxiliary information of the to-be-located UE.

The second sending unit is further used to:
send the first message to the positioning server, in response to the second message.

In the embodiment of the present disclosure, the access network equipment provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

It is to be noted that the positioning processing device provided in the embodiment of the present disclosure is a device capable of executing the above positioning processing method, then all embodiments of the above positioning processing method are applicable to the device, and can achieve the same or similar beneficial effects.

As shown in FIG. 11, one embodiment of the present disclosure further provides an access network equipment, including a memory 1120, a transceiver 1110, and a processor 1100.

The memory 1120 is used to store a computer program. The transceiver 1110 is used to send and receive data under the control of the processor 1100. The processor 1100 is used to read the computer program in the memory 1120 and perform the following operations:
sending a first message to a positioning server; wherein the first message indicates RedCap positioning.

The access network equipment is an access network equipment to which the UE is accessed.

As an optional embodiment, the first message carries one or more of the following:
an identifier of a to-be-located UE;
RedCap capability information of the to-be-located UE;
LPP transmission identifier;
first indication information indicating that the to-be-located UE is a RedCap UE.

As an optional embodiment, the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

As an optional embodiment, the processor 1100 is further used to read the computer program in the memory 1120 and perform the following operations:
receiving a second message sent by the positioning server; where the second message is used to request for obtaining RedCap positioning auxiliary information of the to-be-located UE;
sending the first message to the positioning server, in response to the second message.

In FIG. 11, a bus architecture may include any number of interconnected bus and bridge. Specifically, various circuits of one or more processors, which are represented by the processor 1100, and one or more memories, which are represented by the memory 1120, are linked together. The bus architecture may link various other circuits, such as a peripheral device, voltage regulator and a power management circuit together. These features are well known in this field; therefore, the present disclosure does not make further description on these features. The bus interface provides an interface. The transceiver 1110 may be multiple elements, including a transmitter and a receiver and provide units, which communicate with other devices on the transmission medium. The transmission medium includes radio channels, wired channels, optical cables, etc. The processor 1100 is responsible for managing the bus architecture and the normal processing. The memory 1120 may be used to store data used by the processor 1100 for performing operations.

The processor 1100 may be a central processing unit (CPU), an application specific integrated circuit (ASIC), a field-programmable gate array (FPGA) or a complex programmable logic device (CPLD). The processor may also adopt multi-core architecture.

In the embodiment of the present disclosure, the access network equipment provides to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

It is to be noted that the access network equipment provided in the embodiment of the present disclosure is an access network equipment capable of executing the above positioning processing method, then all embodiments of the above positioning processing method are applicable to the access network equipment, and can achieve the same or similar beneficial effects.

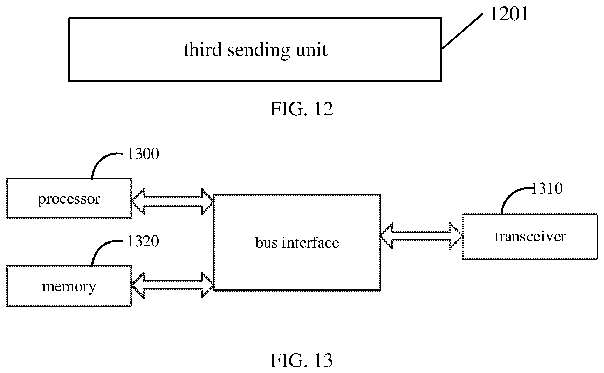

As shown in FIG. 12, one embodiment of the present disclosure further provides a positioning processing device, including:
a third sending unit 1201 used to send a first message to a positioning server; where the first message indicates RedCap positioning.

As an optional embodiment, the first message carries one or more of the following:
an identifier of a to-be-located UE;
RedCap capability information of the to-be-located UE;
location services (LCS) identifier;
first indication information indicating that the to-be-located UE is a RedCap UE;
second indication information indicating that a positioning service type for the UE is RedCap positioning.

As an optional embodiment, the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

As an optional embodiment, the device further includes:
a determining unit used to determine information carried in the first message.

As an optional embodiment, the determining unit is further used to determine the information carried in the first message according to information sent by a positioning service request initiating device.

In the embodiment of the present disclosure, the core network equipment provides, to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

It is to be noted that the positioning processing device provided in the embodiment of the present disclosure is a device capable of executing the above positioning processing method, then all embodiments of the above positioning processing method are applicable to the device, and can achieve the same or similar beneficial effects.

As shown in FIG. 13, one embodiment of the present disclosure further provides a core network equipment, including a memory 1320, a transceiver 1310 and a processor 1300.

The memory 1320 is used to store a computer program. The transceiver 1310 is used to send and receive data under the control of the processor 1300. The processor 1300 is used to read the computer program in the memory 1320 and perform the following operations:
sending a first message to a positioning server; where the first message indicates RedCap positioning.

As an optional embodiment, the first message carries one or more of the following:
an identifier of a to-be-located UE;
RedCap capability information of the to-be-located UE;
location services (LCS) identifier;
first indication information indicating that the to-be-located UE is a RedCap UE;
second indication information indicating that a positioning service type for the UE is RedCap positioning.

As an optional embodiment, the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports RedCap capability;
a measurement period of relaxed radio resource management RRM measurement for the UE that supports RedCap capability;
a maximum number of measurements of relaxed radio resource management RRM measurement for the UE that supports RedCap capability;
mobility status of a UE that supports RedCap capability.

As an optional embodiment, the processor 1300 is further used to read the computer program in the memory 1320 and perform the following operations:
determining information carried in the first message.

As an optional embodiment, the processor 1300 is further used to read the computer program in the memory 1320 and perform the following operations:
determining the information carried in the first message according to information sent by a positioning service request initiating device.

In FIG. 13, a bus architecture may include any number of interconnected bus and bridge. Specifically, various circuits of one or more processors, which are represented by the processor 1300, and one or more memories, which are represented by the memory 1320, are linked together. The bus architecture may link various other circuits, such as a peripheral device, voltage regulator and a power management circuit together. These features are well known in this field; therefore, this disclosure does not make further description on these features. The bus interface provides an interface. The transceiver 1310 may be multiple elements, including a transmitter and a receiver and provide units, which communicate with other devices on the transmission medium. The transmission medium includes radio channels, wired channels, optical cables, etc. The processor 1300 is responsible for managing the bus architecture and the normal processing. The memory 1320 may be used to store data used by the processor 1300 for performing operations.

The processor 1300 may be a central processing unit (CPU), an application specific integrated circuit (ASIC), a field-programmable gate array (FPGA) or a complex programmable logic device (CPLD). The processor may also adopt multi-core architecture.

In the embodiment of the present disclosure, the core network equipment provides, to the positioning server, the first message for assisting the RedCap positioning of the UE, so that the positioning server can determine that this positioning is RedCap positioning and the related characteristics of the RedCap UE, and then the positioning server can take corresponding positioning mechanism to ensure RedCap positioning, thereby solving the problem that the current positioning server cannot identify special positioning scenarios for RedCap type positioning, resulting in RedCap positioning failure.

It is to be noted that the core network equipment provided in the embodiment of the present disclosure is a core network equipment of executing the above positioning processing method, then all embodiments of the above positioning processing method are applicable to the core network equipment, and can achieve the same or similar beneficial effects.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure provides a processor-readable storage medium, including a computer program stored thereon; where the computer program is used to cause a processor to perform steps of the above method embodiment. The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, the present disclosure may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A positioning processing method, comprising:
receiving, by a positioning server, a first message sent by a first device; wherein the first message indicates reduced capability (RedCap) positioning;
initiating, by the positioning server, RedCap positioning according to the first message.

2. The method according to claim 1, wherein the first device includes one or more of the following:
user equipment (UE);
an access network equipment accessed by the UE;
a core network equipment that provides services for the UE.

3. The method according to claim 1, wherein the first message carries one or more of the following:
an identifier of a to-be-located UE;
RedCap capability information of the to-be-located UE;
location services (LCS) identifier;
LTE positioning protocol (LPP) transmission identifier;
NR positioning protocol a (NRPPa) transmission identifier;
first indication information indicating that the to-be-located UE is a RedCap UE;
second indication information indicating that a positioning service type for the UE is RedCap positioning.

4. The method according to claim 3, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

5. The method according to any one of claims 1 to 4, wherein the first message is at least one of the following:
positioning service request message;
LPP message;
NRPPa message.

6. A positioning processing method, comprising:
sending, by a user equipment (UE), a first message to a positioning server; wherein the first message indicates reduced capability (RedCap) positioning.

7. The method according to claim 6, wherein the first message carries one or more of the following:
an identifier of a to-be-located UE;
RedCap capability information of the to-be-located UE;
LPP transmission identifier;
first indication information indicating that the to-be-located UE is a RedCap UE.

8. The method according to claim 7, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management RRM measurement for the UE that supports RedCap capability;
mobility status of the UE that supports the RedCap capability.

9. A positioning processing method, comprising:
sending, by an access network equipment, a first message to a positioning server; wherein the first message is used to indicate reduced capability (RedCap) positioning;
wherein the access network equipment is an access network equipment to which a user equipment (UE) accesses.

10. The method according to claim 9, wherein the first message carries one or more of the following:
an identifier of a to-be-located UE;
RedCap capability information of the to-be-located UE;
NR positioning protocol a (NRPPa) transmission identifier;
first indication information indicating that the to-be-located UE is a RedCap UE.

11. The method according to claim 10, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports the RedCap capability;
a measurement period of relaxed radio resource management (RRM) measurement for the UE that supports the RedCap capability;
a maximum number of measurements of relaxed radio resource management RRM measurement for the UE that supports the RedCap capability;
mobility status of the UE that supports the RedCap capability.

12. A positioning processing method, comprising:
sending, by a core network equipment, a first message to a positioning server; wherein the first message indicates reduced capability (RedCap) positioning.

13. The method according to claim 12, wherein the first message carries one or more of the following:
an identifier of a to-be-located user equipment (UE);
RedCap capability information of the to-be-located UE;
location services (LCS) identifier;
first indication information indicating that the to-be-located UE is a RedCap UE;
second indication information indicating that a positioning service type for the UE is RedCap positioning.

14. The method according to claim 13, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports theRedCap capability;
a maximum number of measurements of relaxed radio resource management (RRM) measurement for the UE that supports the RedCap capability;
mobility status of the UE that supports the RedCap capability.

15. The method according to claim 14, wherein before the core network equipment sends the first message to the positioning server, the method further includes:
determining, by the core network equipment, information carried in the first message.

16. The method according to claim 15, wherein the determining, by the core network equipment, information carried in the first message, includes:
determining, by the core network equipment, the information carried in the first message according to information sent by a positioning service request initiating device.

17. A positioning processing device, comprising:
a receiving unit configured to receive a first message sent by a first device; wherein the first message indicates reduced capability (RedCap) positioning;
a positioning unit used to initiate RedCap positioning according to the first message.

18. The device according to claim 17, wherein the first device includes one or more of the following:
user equipment (UE);
an access network equipment accessed by the UE;
a core network equipment that provides services for the UE.

19. The device according to claim 17, wherein the first message carries one or more of the following:
an identifier of a to-be-located UE;
RedCap capability information of the to-be-located UE;
location services (LCS) identifier;
LTE positioning protocol (LPP) transmission identifier;
NR positioning protocol a (NRPPa) transmission identifier;
first indication information indicating that the to-be-located UE is a RedCap UE;
second indication information indicating that a positioning service type for the UE is RedCap positioning.

20. The device according to claim 19, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

21. The device according to any one of claims 17 to 20, wherein the first message is at least one of the following:
positioning service request message;
LPP message;
NRPPa message.

22. A positioning server, comprising: a memory, a transceiver, and a processor;
wherein the memory is used to store a computer program; the transceiver is used to send and receive data under control of the processor; the processor is used to read the computer program in the memory and perform the following operations:
receiving a first message sent by a first device; wherein the first message indicates reduced capability (RedCap) positioning;
initiating RedCap positioning according to the first message.

23. The positioning server according to claim 22, wherein the first device includes one or more of the following:
user equipment (UE);
an access network equipment accessed by the UE;
a core network equipment that provides services for the UE.

24. The positioning server according to claim 22, wherein the first message carries one or more of the following:
an identifier of a to-be-located UE;
RedCap capability information of the to-be-located UE;
location services (LCS) identifier;
LTE positioning protocol (LPP) transmission identifier;
NR positioning protocol a (NRPPa) transmission identifier;
first indication information indicating that the to-be-located UE is a RedCap UE;
second indication information indicating that a positioning service type for the UE is RedCap positioning.

25. The positioning server according to claim 24, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

26. The positioning server according to any one of claims 22 to 25, wherein the first message is at least one of the following:
positioning service request message;
LPP message;
NRPPa message.

27. A positioning processing device, comprising:
a first sending unit configured to send a first message to a positioning server; wherein the first message indicates reduced capability (RedCap) positioning.

28. The device according to claim 27, wherein the first message carries one or more of the following:
an identifier of a to-be-located user equipment (UE);
RedCap capability information of the to-be-located UE;
LPP transmission identifier;
first indication information indicating that the to-be-located UE is a RedCap UE.

29. The device according to claim 28, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

30. A user equipment (UE), comprising: a memory, a transceiver, and a processor;
wherein the memory is used to store a computer program; the transceiver is used to send and receive data under control of the processor; the processor is used to read the computer program in the memory and perform the following operations:
sending a first message to a positioning server; wherein the first message indicates reduced capability (RedCap) positioning.

31. The UE according to claim 30, wherein the first message carries one or more of the following:
an identifier of a to-be-located user equipment (UE);
RedCap capability information of the to-be-located UE;
LTE positioning protocol (LPP) transmission identifier;
first indication information indicating that the to-be-located UE is a RedCap UE.

32. The UE according to claim 31, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

33. A positioning processing device, applied to an access network equipment, comprising:
a second sending unit configured to send a first message to a positioning server; wherein the first message indicates reduced capability (RedCap) positioning;
wherein the access network equipment is an access network equipment to which a user equipment (UE) accesses.

34. The device according to claim 33, wherein the first message carries one or more of the following:
an identifier of a to-be-located UE;
RedCap capability information of the to-be-located UE;
LTE positioning protocol (LPP) transmission identifier;
first indication information indicating that the to-be-located UE is a RedCap UE.

35. The device according to claim 34, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

36. An access network equipment, comprising: a memory, a transceiver, and a processor;
wherein the memory is used to store a computer program; the transceiver is used to send and receive data under control of the processor; the processor is used to read the computer program in the memory and perform the following operations:
sending a first message to a positioning server; wherein the first message indicates reduced capability (RedCap) positioning;
wherein the access network equipment is an access network equipment to which a user equipment (UE) accesses.

37. The access network equipment according to claim 36, wherein the first message carries one or more of the following:
an identifier of a to-be-located UE;
RedCap capability information of the to-be-located UE;
LTE positioning protocol (LPP) transmission identifier;
first indication information indicating that the to-be-located UE is a RedCap UE.

38. The access network equipment according to claim 37, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by a UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

39. A positioning processing device, comprising:
a third sending unit configured to send a first message to a positioning server; wherein the first message indicates reduced capability (RedCap) positioning.

40. The device according to claim 39, wherein the first message carries one or more of the following:
an identifier of a to-be-located user equipment (UE);
RedCap capability information of the to-be-located UE;
location services (LCS) identifier;
first indication information indicating that the to-be-located UE is a RedCap UE;
second indication information indicating that a positioning service type for the UE is RedCap positioning.

41. The device according to claim 40, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

42. The device according to claim 41, wherein before the core network equipment sends the first message to the positioning server, the method further includes:
determining, by the core network equipment, information carried in the first message.

43. The device according to claim 42, wherein the determining, by the core network equipment, information carried in the first message, includes:
determining, by the core network equipment, the information carried in the first message according to information sent by a positioning service request initiating device.

44. An access network equipment, comprising: a memory, a transceiver, and a processor;
wherein the memory is used to store a computer program; the transceiver is used to send and receive data under control of the processor; the processor is used to read the computer program in the memory and perform the following operations:
sending a first message to a positioning server; wherein the first message indicates reduced capability (RedCap) positioning.

45. The access network equipment according to claim 44, wherein the first message carries one or more of the following:
an identifier of a to-be-located user equipment (UE);
RedCap capability information of the to-be-located UE;
location services (LCS) identifier;
first indication information indicating that the to-be-located UE is a RedCap UE;
second indication information indicating that a positioning service type for the UE is RedCap positioning.

46. The access network equipment according to claim 45, wherein the RedCap capability information of the to-be-located UE includes one or more of the following:
third indication information indicating that the to-be-located UE supports the RedCap capability;
a maximum bandwidth supported by the to-be-located UE in a frequency range 1 (FR1);
a maximum bandwidth supported by the to-be-located UE in FR2;
the number of receiving antennas or the number of transmitting antennas supported by the UE that supports the RedCap capability;
a measurement period of relaxed radio resource management (RRM) measurement for the UE that supports the RedCap capability;
a maximum number of measurements of relaxed radio resource management (RRM) measurement for the UE that supports the RedCap capability;
mobility status of the UE that supports the RedCap capability.

47. The access network equipment according to claim 46, wherein before the core network equipment sends the first message to the positioning server, the method further includes:
determining, by the core network equipment, information carried in the first message.

48. The access network equipment according to claim 47, wherein the determining, by the core network equipment, information carried in the first message, includes:
determining, by the core network equipment, the information carried in the first message according to information sent by a positioning service request initiating device.

49. A processor-readable storage medium, comprising a computer program stored thereon; wherein the computer program is used to cause a processor to perform the steps in the method according to any one of claims 1 to 5; or perform the steps in the method according to any one of claims 9 to 11; or perform the steps in the method according to any one of claims 12 to 16.
